# EUROPÄISCHE PATENTSCHRIFT

(11) **EP 0 675 235 B1**
(45) Veröffentlichungstag und Bekanntmachung des Hinweises auf die Patenterteilung: **02.07.1997**
(21) Anmeldenummer: 95104471.8
(22) Anmeldetag: 27.03.1995
(51) Int. Cl.: E03C 1/086

(54) **Ablauftrichter**
Drain funnel
Entonnoir d'écoulement

(30) Priorität: 30.03.1994 DE 9405348 U
(43) Veröffentlichungstag der Anmeldung: 04.10.1995
(73) Patentinhaber: HONEYWELL AG, 63067 Offenbach (DE)
(72) Erfinder: Vollmer, Rudolf, Dipl.-Ing. (FH), D-74821 Mosbach (DE); Jurenka, Emil, D-74864 Fahrenbach-Robern (DE)
(74) Vertreter: Herzbach, Dieter, Dipl.-Ing.

(56) Entgegenhaltungen:
- DE-A- 2 658 742
- FR-A- 717 025
- FR-A- 1 217 858

## Beschreibung

Die vorliegende Erfindung bezieht sich auf einen Ablauftrichter für Armaturen nach dem Gattungsbegriff des Patentanspruches 1.

Es ist bislang üblich, bestimmte Armaturen, wie Sicherheitsventile, Rohrtrenner und rückspülbare Hauswasser-Feinfilter mit einem Ablauftrichter zu versehen, um das austretende Wasser kontrolliert abzuführen. Diese Lösung ist befriedigend bei Rohrtrennern, bei deren Umschaltung nur ein Kammervolumen entlüftet werden muß; sie arbeitet auch in den meisten Fällen zufriedenstellend bei Sicherheitsventilen; sie führt aber zu Problemen bei rückspülbaren Hauswasser-Feinfiltern, bei denen bei der Rückspülung das Medium unter dem Leitungsdruck mit bis zu 10 bar austritt. Das auftretende Spritzwasser stellt eine Belästigung für die Person dar, die beispielsweise das Rückspülwasser in einem Eimer aufzufangen versucht.

Aus der DE-A-26 58 742 ist ein Strahlregler bekannt, von dem die vorliegende Erfindung ausgeht und der eine Prall- und Verteilerplatte als ein den Druck reduzierendes Mittel verwendet. Darüber hinaus werden Siebe verwendet, die sich leicht verstopfen können.

Es ist daher die Aufgabe der vorliegenden Erfindung, einen Ablauftrichter so auszubilden, daß auch in den Fällen, wo das Medium mit hohen Drücken aus einer Armatur austritt, dieses kontrolliert abgeführt werden kann, ohne daß die Gefahr der Verstopfung durch mit dem Medium mitgeführte Partikel besteht.

Die Lösung dieser Aufgabe gelingt gemäß den kennzeichnenden Merkmalen des Patentanspruches 1. Weitere vorteilhafte Ausgestaltungen der Erfindung können den abhängigen Ansprüchen entnommen werden.

Anhand eines in den Figuren der beiliegenden Zeichnung dargestellten Ausführungsbeispieles sei im folgenden der Ablauftrichter gemäß der Erfindung näher beschrieben. Es zeigen:
Fig. 1 einen Ablauftrichter gemäß der Erfindung; und
Fig. 1a eine Schnittansicht entlang der Linie A-A in Fig. 2.

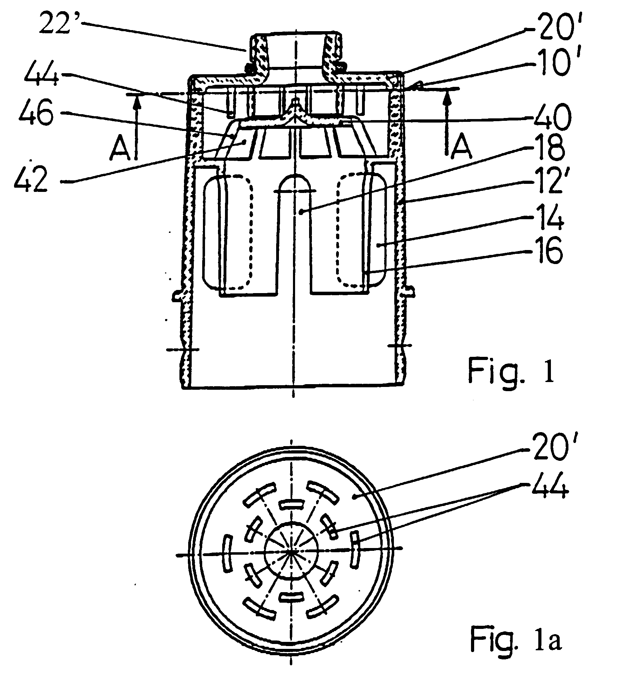

Der in Fig. 1 dargestellte Ablauftrichter 10' besitzt ein Gehäuse 12' mit Öffnungen 14 und eine Spritzschürze 16, die mit Ausnehmungen 18 versehen ist.

Das Gehäuse 12' weist an der nach innen springenden Spritzschürze 16 eine nach oben über eine konische Ringwand 46 angeformte Prall- und Verteilerplatte 40 auf, wobei die Ringwand 46 mit Öffnungen 42 entlang des Umfangs versehen ist.

Der Deckel 20' ist an seiner Unterseite mit auf zwei Kreisdurchmessern angeordneten Stegsegmenten 44 versehen. Die Länge der Stegsegmente in Kreisumfangsrichtung ist auf dem äußeren Kreis größer als auf dem inneren Kreis und die Stegsegmente auf dem inneren Kreis sind so angeordnet, daß sie die zwischen den Stegsegmenten auf dem äußeren Kreis gebildeten Durchlässe abdecken, so daß ein druckreduzierendes Labyrinth gebildet wird.

Es liegt dem Fachmann auf der Hand, daß zahlreiche Modifikationen des Ablauftrichters möglich sind, die im Rahmen der vorliegenden Erfindung liegen.

Die Stegsegmente können auch auf mehr als zwei Durchmessern angeordnet sein. Ferner können die Stegsegmente und die Prall- und Verteilerplatte beide an dem Deckel oder beide an dem Gehäuse angeformt sein. Von Bedeutung ist lediglich, daß druckreduzierende und strahlaufweitende Mittel vorgesehen sind, um das Medium ohne Belästigung für die Bedienungsperson kontrolliert abzuführen.

## Patentansprüche

1. Ablauftrichter (10') für Armaturen, insbesondere für rückspülbare Hauswasserfilter, mit einem zentralen Anschlußflansch (22') für den Anschluß an die Armatur und mit innerhalb eines Gehäuses (12') des Ablauftrichters (10') angeordneten Mitteln zur Druckreduzierung und Strahlaufweitung des abgeführten Mediums, welche eine Prall- und Verteilerplatte (40) gegenüber dem Anschlußflansch (22') umfassen, **dadurch gekennzeichnet**, daß die Mittel weiter auf zwei oder mehr konzentrischen Kreisdurchmessern angeordnete Stegsegmente (44) umfassen, wobei die Kreisdurchmesser, die Platte (40) und das Gehäuse (12') koaxial zueinander angeordnet sind und die Stegsegmente (44) zuflußseitig gegenüber der Platte (40) innerhalb des Gehäuses (12') angeordnet sind.

2. Ablauftrichter nach Anspruch 1, **dadurch gekennzeichnet**, daß das Gehäuse (12') nach oben durch einen den Anschlußflansch (22') aufweisenden Deckel (20')abgeschlossen ist, daß die Prall- und Verteilerplatte (40) in dem Gehäuse (12') angeformt ist und daß die Stegsegmente (44) an dem Deckel (20') angeformt sind.

3. Ablauftrichter nach Anspruch 2, **dadurch gekennzeichnet**, daß die Prall- und Verteilerplatte (40) über eine mit Öffnungen (42) versehene konzentrische und konische Ringwand (46) in dem Gehäuse (12') abgestützt ist.

4. Ablauftrichter nach einem der Ansprüche 1 bis 3, **dadurch gekennzeichnet**, daß das Gehäuse (12') und der Deckel (20') aus Kunststoff bestehen und durch eine Ultraschall-Schweißung miteinander verbunden werden.

## Claims

1. Drain funnel (10') for water supply devices, in particular for back-flushable domestic water filters, having a central connecting socket (22') for a connection to the device and having means provided within a housing (12') of said drain funnel (10') for pressure reducing and jet expansion of the drained medium which comprises a baffle and distribution plate (40) opposite to the connecting socket (22'), **characterized in that** said means further comprise web segments (44) arranged on two or more concentrical circle diameters, whereat the circle diameters, the plate (40) and the housing (12) are arranged coaxially with respect to each other and the web segments (44) are arranged opposite and upstream to the plate (40) within the housing (12').

2. Drain funnel according to claim 1, **characterized in that** the housing (12') at its upper side is closed by a cover (20') comprising the connecting socket (22'), that the baffle and distribution plate (40) is tip-stretched to the housing (12') and that the web segments (44) are tip-stretched to the cover (20').

3. Drain funnel according to claim 2, **characterized in that** the baffle and distribution plate (40) abuts the housing (12) via an annular, concentrical and conical wall (46) having openings (42) in it.

4. Drain funnel according to one of claims 1 to 3, **characterized in that** the housing (12') and the cover (20') are made from synthetic resin and are connected with each other by an ultrasonic welding.

## Revendications

1. Entonnoir d'écoulement (10') pour accessoires de robinetterie, notamment pour des filtres d'eau domestique rétrolavables, comportant une bride de raccordement centrale (22') pour le raccordement à l'accessoire de robinetterie et des moyens pour réduire la pression et élargir le jet du fluide évacué, disposés à l'intérieur d'un boîtier (12') de l'entonnoir d'écoulement (10'), qui comprennent une plaque de distribution formant chicane (40) en regard de la bride de raccordement (22'), caractérisé en ce que les moyens comprennent, en outre, des segments à âme pleine (44) disposés sur deux ou plus de deux diamètres de cercle concentriques, les diamètres de cercle, la plaque (40) et le boîtier (12') étant coaxiaux les uns aux autres et les segments à âme pleine (44) étant disposés côté arrivée en regard de la plaque (40), à l'intérieur du boîtier (12').

2. Entonnoir d'écoulement selon la revendication 1, caractérisé en ce que le boîtier (12') est fermé vers le haut par un couvercle (20') muni de la bride de raccordement (22'), en ce que la plaque de distribution formant chicane (40) est fixée dans le boîtier (12') et en ce que les segments à âme pleine (44) sont fixés sur le couvercle (20').

3. Entonnoir d'écoulement selon la revendication 2, caractérisé en ce que la plaque de distribution formant chicane (40) est supportée dans le boîtier (12') par une paroi annulaire conique et concentrique (46) munie d'ouvertures (42).

4. Entonnoir d'écoulement selon l'une des revendications 1 à 3, caractérisé en ce que le boîtier (12') et le couvercle (20') sont en matière synthétique et sont reliés ensemble par un soudage aux ultrasons.
